# EUROPEAN PATENT APPLICATION

(11) **EP 4 760 531 A1**
(43) Date of publication of application: **17.06.2026**
(21) Application number: 25195031.7
(22) Date of filing: 11.08.2025
(51) Int. Cl.: G06F 16/28, G06F 16/901

(54) **SPACE-OPTIMIZED FOREST FOR GRAPH DATABASES**

(30) Priority: 10.12.2024 US 202418976237
(71) Applicant: Lemon Inc., Grand Cayman, KY1-1205 (KY); Beijing Volcano Engine Technology Co., Ltd., Beijing 100190 (CN)
(72) Inventor: CHEN, Cheng, Singapore (SG); ZHANG, Wei, Beijing, 100028 (CN); ZENG, Zhigang, Beijing, 100028 (CN); YANG, Shijiao, Beijing, 100028 (CN); ZHOU, Bingyu, Beijing, 100028 (CN); ZHU, Huiming, Beijing, 100028 (CN); CHEN, Chao, Beijing, 100028 (CN); ZHAO, Yongjun, Beijing, 100028 (CN); HU, Yingqian, Beijing, 100028 (CN); CHENG, Miaomiao, Beijing, 100028 (CN); LI, Meng, Beijing, 100028 (CN); TAN, Hongfei, Beijing, 100028 (CN); LIU, Mengjin, Beijing, 100028 (CN); LIN, Hexiang, Beijing, 100028 (CN); ZHANG, Shuai, Beijing, 100028 (CN); ZHANG, Lei, Beijing, 100028 (CN)
(74) Representative: Isarpatent

(57) **Abstract**

Implementations for a space-optimized graph database system are provided. One implementation includes a computing system comprising: processing circuitry and memory storing instructions that causes the processing circuitry to: store a graph database comprising an initial tree graph storing a plurality of data entries, each data entry comprising a respective field identifier; receive a query to update the graph database, wherein the query comprises a request to add a new data entry; determine a splitting event to perform based on one or more predetermined criteria; generate a new tree graph corresponding to a field identifier of the new data entry by splitting off a subset of the plurality of data entries of the initial tree graph, wherein the subset comprises all data entries of the initial tree graph that correspond to the field identifier of the new data entry; and update the new tree graph in accordance with the query.

## Description

### BACKGROUND

A graph database is a type of database that represents and stores data using graph structures. Graph components include nodes, edges, and properties, which can be used to describe and store data entries and their relationships. Such structures enable the use of graph algorithms to analyze relationships among data in ways that would be difficult to see with other methods. As the connectedness and data volume of the graph increase, graph algorithms become a more powerful tool for analyzing and utilizing data cost-effectively. For example, querying relationships in a graph database can involve graph traversal algorithms that take advantage of the connectivity within a graph to provide more efficient querying compared to relational database queries. Paths, distances between nodes, and clustering properties of nodes provide intuitive indicators of various database properties. Because the graph itself explicitly stores relationships, queries and algorithms performed on the graph components can be quickly executed. In contrast, traditional relational database calculates relationships during queries through numerous fundamental operations.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

Implementations for a space-optimized graph database system are provided. One implementation includes a computing system comprising: processing circuitry and memory storing instructions that, when executed, causes the processing circuitry to: store a graph database comprising an initial tree graph storing a plurality of data entries, each data entry comprising a respective field identifier; receive a query to update the graph database, wherein the query comprises a request to add a new data entry; determine a splitting event to perform based on one or more predetermined criteria; generate a new tree graph corresponding to a field identifier of the new data entry by splitting off a subset of the plurality of data entries of the initial tree graph, wherein the subset of the plurality of data entries comprises all data entries of the initial tree graph that correspond to the field identifier of the new data entry; and update the new tree graph in accordance with the query.

### BRIEF DESCRIPTION OF THE DRAWINGS

FIG. 1 shows a schematic view of an example computing system for implementing a graph database using a space-optimized forest graph.
FIG. 2 shows a schematic view of an example Bw-tree for storing data, which can be implemented using the example computing system of FIG. 1.
FIG. 3 shows a schematic view of a graph database implemented using a single Bw-tree with multiple prepended delta records.
FIGS. 4A and 4B show schematic views of an example graph database implemented using a space-optimized Bw-tree forest graph, which can be implemented using the example computing system of FIG. 1.
FIG. 5 shows a process flow diagram of an example method for implementing a graph database using a space-optimized forest graph, which can be implemented using the example computing system of FIG. 1.
FIG. 6 shows a process flow diagram of an example method for implementing a graph database using a space-optimized forest graph for a social media platform, which can be implemented using the example computing system of FIG. 1.
FIG. 7 shows a schematic view of an example computing system that can enact one or more of the methods and processes described herein.

### DETAILED DESCRIPTION

Graph databases can be used to store large-scale graph data for various applications. Generally, graph databases are implemented using tree structures to provide powerful algorithmic capabilities, such as fast queries, insertions, deletions, etc. Various types of tree graphs have been contemplated for use in database systems, including but not limited to binary trees, mary trees, B-trees, B⁺ trees, and Bw-trees. Different applications may have different design considerations that affect how the database is implemented. For example, concurrency can be an important factor for applications with constant update requests. In some tree graph databases (e.g., Bw-tree graph databases), data entries are stored on leaf nodes in a sorted manner, which can enable fast queries. When multiple requests to update a leaf node are received concurrently, writing conflicts can occur, resulting in retries and waiting times.

In some applications, concurrent writing conflicts are largely unavoidable. One such example includes databases implemented for a social media platform where various aspects associated with users are stored/updated dynamically. On a social media platform, many different interactions between users and media content can be advantageously stored for various purposes. For example, information relating to a user "subscribing" to or "following" another user can be stored. In another example, information relating to each user's preferences for media content can be stored, which can provide support for various functionalities such as providing recommendations based on the user's preferences. One direct way to store such information is to provide a way for users to perform a like-action on media content (e.g., clicking "like" on an image, a video, etc.) and to record/store such actions when they occur. In a conventional database system, storing like-actions is generally implemented using a single tree graph for efficiency. However, on a social media platform with sufficient popularity, like-actions performed by different users can result in constant update requests to the tree graph, resulting in massive concurrent write conflicts. This can substantially diminish the concurrent write throughput of the database system.

Read and write across different tree graphs are entirely independent and do not interfere with one another. As such, dividing the like-actions to be stored into separate tree graphs corresponding to different users can solve the problem of concurrent write conflicts. Since a user will likely not perform a like-action on two videos at the same moment, such a storage scheme can significantly mitigate the risk of access collisions within the framework. However, this approach leads to additional storage space waste. In the given example, the activity level of users of a social media platform generally follows a power-law distribution where there are some extremely active users while the remaining majority of ordinary users are much less active. In graph database systems, the backend storage of tree graphs is often block-based allocation. To align with these storage units, a single tree graph typically contains a large number of stored data elements. If a separate tree graph is allocated for each user, the block-based allocation of storage can result in substantial space wastage for the vast majority of ordinary users from both the storage holes in the leaf nodes and the memory overhead in maintaining additional data structures such as intermediate nodes and mapping tables.

In view of the observations above, implementations of a database system utilizing a space-optimized forest graph are provided. Utilizing a space-optimized forest graph as a storage engine can be implemented in various ways. In some implementations, the database system includes an initial tree graph for storing data entries. Data entries can each be associated with a field identifier, such as a user identifier (e.g., username, account name, account number, etc.). Based on the frequency of query requests, data entries associated with a high-activity field identifier can be split off the initial tree graph and stored in a new separate tree graph. The database system can include a hash table that stores the field identifiers and pointers to their respective tree graphs as key-value pairs. Using the social media platform example described above, the space-optimized forest graph can be implemented with an initial tree graph that stores like-actions from users, including new users. Upon determining that a user is a high-activity user (e.g. high rate of query requests above a predetermined threshold or high number of like-actions), the stored like-actions associated with said user can be split off into a separate tree graph. Such a scheme would likely reduce write conflicts in the initial tree graph without allocating extra storage space for separate tree graphs for every individual user.

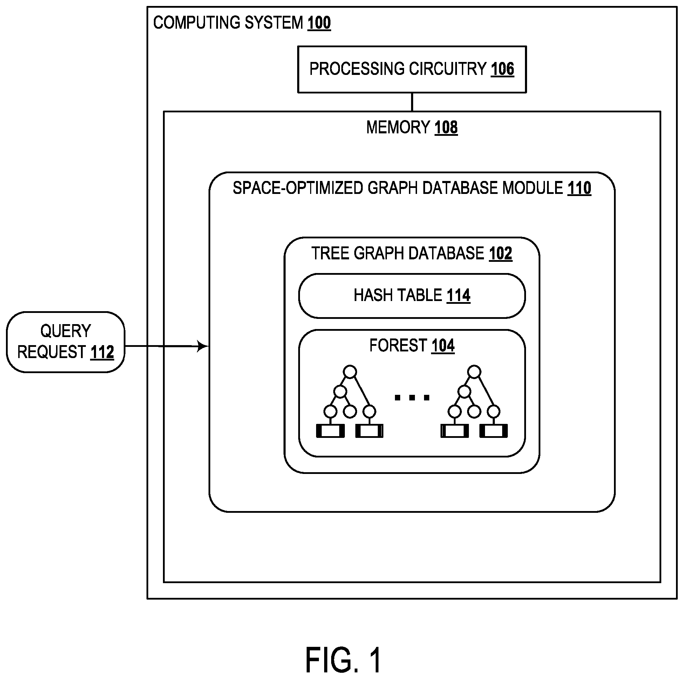

Turning now to the figures, implementations of a database system utilizing a space-optimized forest graph are depicted and described in further detail. FIG. 1 shows a schematic view of an example computing system 100 for implementing a graph database 102 using a space-optimized forest graph 104. The example computing system 100 includes processing circuitry 106 and memory 108 storing instructions that, during execution, cause the processing circuitry 106 to perform the processes described herein. The example computing system 100 can be implemented with various types of computing devices, including but not limited to personal computers, servers, and mobile devices. For example, the computing system 100 can include a plurality of computing devices, and processing circuitry 106 and memory 108 may each include multiple components spread across multiple computing devices (e.g., processing circuitry 106 can include multiple processors within a single device or spread across multiple devices). The devices may be locally or remotely located. In some implementations, the computing system 100 is implemented as cloud storage servers. The example computing system 100 can also include non-depicted components for providing various functionalities, including components on individual computing devices.

The example computing system 100 includes a space-optimized graph database module 110 capable of implementing the graph database 102 and servicing query requests 112 made to the graph database 102. Query requests 112 can include any type of database query, including queries for storing, manipulating, and/or retrieving data. The module 110 can implement the graph database 102 in various ways. In the depicted example, the graph database 102 is implemented using tree structures. Various types of tree structures can be utilized, including but not limited to binary trees, B-trees, B⁺ trees, and Bw-trees.

The module 110 can implement the tree graph database 102 by initializing the space-optimized forest graph 104 with an initial tree graph for storing data entries (e.g., key-value pairs). Upon reaching certain predetermined criteria, a new tree graph can be generated in the space-optimized forest graph 104 by splitting off a portion of the initial tree graph. The module 110 further initializes the tree graph database 102 with a hash table 114 that stores identifiers and pointers to the separate tree graphs within the forest graph 104. The space-optimized forest graph 104 can be implemented in various ways. In FIG. 1, each of the tree graphs within the space-optimized forest 104 is logically depicted as connected nodes where leaf nodes point to respective data blocks containing stored data entries. In physical implementations, each of the tree graphs within the space-optimized forest 104 can be implemented using a mapping table storing node identifiers and corresponding pointers to the physical addresses of respective nodes. Various other designs can also be utilized.

Upon receiving a query request 112 that includes a request to add a new data entry to the tree graph database 102, the module 110 determines which tree graph in the space-optimized forest graph 104 to add the new data entry. Initially, the space-optimized forest graph 104 only includes an initial tree graph where all new data entries are added. As query requests become more frequent, the module 110 determines splitting events to perform, which splits the initial tree graph into a forest graph containing multiple trees. Read and write requests across different tree graphs can be entirely independent and do not interfere with one another. As such, splitting the initial tree graph based on the frequency of certain access requests can help to mitigate future concurrent write conflicts.

The module 110 can determine a splitting event in various ways. In some implementations, a splitting event is performed upon meeting predetermined criteria associated with a field identifier of the new data entry. To mitigate concurrent write conflicts, field identifiers associated with the source of the update request can be used to determine whether the new entry should be added to the initial tree graph. In the case that the source of the update request is determined to be a high-activity source, the module 110 can perform a splitting event to split off data entries associated with said high-activity source from the initial tree graph, forming a separate tree graph. The update request can then be performed on the new separate tree graph. In other implementations, the update request is performed on the initial tree graph before the splitting event. Queries made by high-activity sources can advantageously utilize separate tree graphs rather than the initial tree graph. Queries made by the remaining sources (low-activity sources) can utilize the initial tree graph, which should result in fewer concurrent write conflicts. In some implementations, the module 110 continuously monitors the tree graph database 102 to determine a splitting event. In some implementations, the module 110 determines whether to perform a splitting event in response to receiving a request to add a new data entry the tree graph database 102.

The graph database 102 can be implemented for various applications. Using the previously discussed example of a social media platform, the graph database 102 can be implemented for storing like-actions performed by users of the social media platform. In such cases, the new data entry to be stored can represent a like-action by a given user. The new data entry can include, for example, a user identifier associated with the user performing the like-action, the media content on which the like-action was performed, and various other properties (e.g., time, date, etc.). At first, the initial tree graph can store like-actions for all users, including new users. As access requests become more frequent, the module 110 can determine to split off a portion of the initial tree graph associated with a high-activity user. Future access requests (future like-actions performed) by the high-activity user can be made to the new split-off tree graph, which is independent of queries to the initial tree graph. As can readily be appreciated, the graph database 102 can be implemented to store any kind of data. In some implementations, the graph database 102 is implemented to store relationships between users (e.g., subscriber, follower, etc.).

The criteria for performing a splitting event can be determined in various ways. In some implementations, a splitting event is determined upon determining that a user's access frequency and/or the user's number of like-actions performed are above a predetermined threshold. In further implementations, the predetermined threshold includes a threshold rate of performing like-actions by a user that exceeds that of approximately 80% of all users. Additionally or alternatively, the predetermined threshold can include a threshold number of like-actions performed that exceeds that of approximately 80% of all users. As can readily be appreciated, any other percentage threshold can also be implemented.

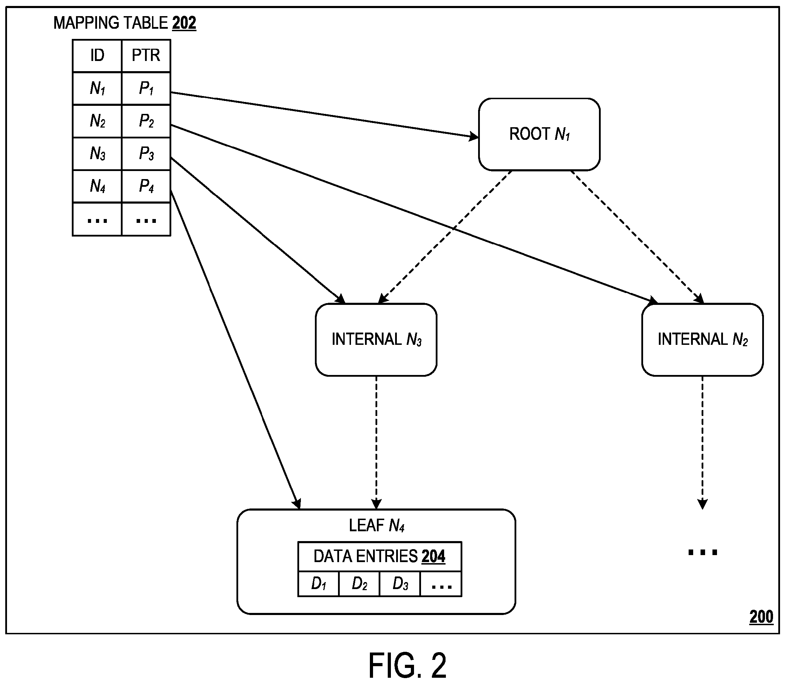

As discussed above, various types of tree structures can be implemented for a space-optimized forest database. Different tree designs can provide different advantages. For example, Bw-trees are well-suited for implementations in hardware. FIG. 2 shows a schematic view of an example Bw-tree 200 for storing data. The Bw-tree 200 is organized using a mapping table 202 that describes the physical locations of the nodes, which can also be referred to as pages, of the Bw-tree 200. The mapping table 202 includes an identifier column that lists identifiers of the nodes of the Bw-tree 200 and a corresponding pointer column that lists respective pointers to the physical locations of the nodes. The example Bw-tree 200 includes at least a root node *N₁,* internal nodes *N₂* and *N₃,* and a leaf node *N₄.* In the depicted example, data entries 204 are stored at the leaf node *N₄.* As shown, the leaf node *N₄* includes at least three data entries *D₁- D₃.* In other implementations, each of the leaf nodes of a Bw-tree includes a pointer to a data block that stores data entries.

The data entries 204 can be in any kind of format. In some implementations, each data entry includes a key-value pair. Using the social media platform example described above, each data entry 204 can include information describing a like-action performed by a user on a media content. For example, each of the data entries 204 can include a user identifier and a media content identifier. In some implementations, the user identifier is stored as the key, and the media content identifier is stored as the value. In other implementations, the user identifier and the media content identifier are stored as a key, and other features are stored as the value. Features can include any type of information, such as the time when the like action was performed.

In some implementations, the Bw-tree 200 stores edge information of a graph where nodes represent users and media content and where an edge between two nodes represents a user (first node) performing a like-action on a media content (second node). In this scenario, whenever a user performs a like-action on a media content, an edge is established between the node representing the user and the node representing the media content. This edge, which describes the source and destination nodes, can be stored in the Bw-tree 200 as the key of a data entry to represent a user performing a like-action on a media content. Edge features (e.g., the time when the like-action was performed) can be stored as a value associated with the key. Additionally or alternatively, the Bw-tree 200 can store information describing relationships between users (e.g., subscriber, follower, etc.). For example, rather than storing an edge between a user node and a media content node, the Bw-tree 200 can store information relating to an edge between users. Directed edges can be used to identify the follower and followee relationship. In some implementations, this relationship is defined by how the information is stored (e.g., first node indicates the follower).

The design of Bw-trees enables various functionalities. Similar to B⁺ trees, information is stored in leaf nodes in a sorted manner while the internal nodes provide information directing the search of a particular data entry. Bw-trees can be implemented as logical pages and, as such, do not have fixed sizes. For example, the use of the mapping table 202 in FIG. 2 provides the physical locations of the nodes (pages) of the Bw-tree 200. As such, the nodes may reside in memory at different locations, enabling the size of a given node to change. Another distinct feature of Bw-trees is the update process. Rather than making changes to the tree in place, a delta record describing the update is prepended to the existing page. The prepended delta record points to the physical address of the page, and pointers to the page are redirected to the delta record.

Redirecting pointers can be performed via an atomic operation. As such, only one operation can succeed if multiple attempts are trying to prepend different delta records to the same page. A failed update attempt can retry the update process, which would include attempting to prepend a delta record to the previously prepended delta record. After several updates, a chain of delta records can form. As the chain grows, search performance can suffer. To address this, page consolidation can be performed periodically to create a new base page with the prepended delta record updates applied.

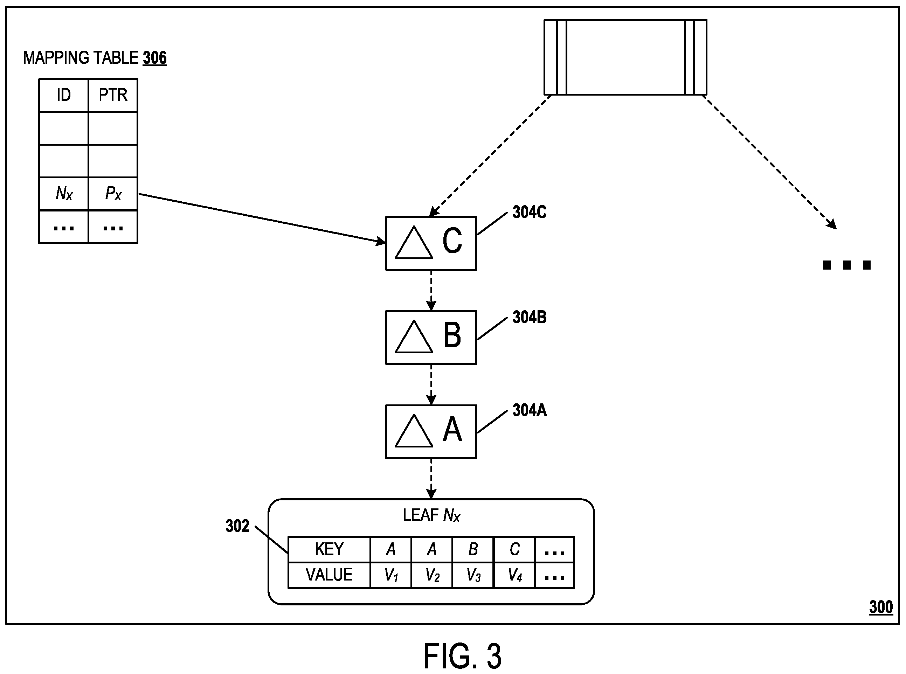

Although the use of delta record updates provides database integrity, the performance of the system suffers from retries and waiting times when there are multiple concurrent attempts at prepending delta records. For example, using the social media platform example described above, a Bw-tree database can be implemented for storing like-actions performed by users. Traditionally, like-actions, and other similar data storage schemes, are stored in a single Bw-tree. FIG. 3 shows a schematic view of a graph database implemented using a single Bw-tree 300 with multiple prepended delta records. The Bw-tree 300 is implemented to store data entries where each data entry includes a field identifier key and an associated value. For example, the field identifier key can be a user identifier of the user performing the like-action, and the value can be an identifier of the media content on which the like-action was performed. In some implementations, the field identifier key describes both the user and the media content, and the value field can be used to describe other features, such as the time when the like action was performed.

The depicted portion of the Bw-tree 300 shows a leaf node *N_{X}* storing key-value pair data entries. In the depicted example, the leaf node *N_{X}* stores at least four data entries with three different field identifiers ('A', 'B', and 'C'). Using the example described above, the three different field identifiers can correspond to three different users. Currently, the Bw-tree 300 includes a chain of three delta records 304A-304C for respectively updating (adding) three data entries with different field identifiers. The latest delta record 304C serves as the leaf node *N_{X}*'s current memory address. Accordingly, the mapping table 306 includes an entry listing the leaf node *N_{X}* and a corresponding pointer to the latest delta record 304C.

The Bw-tree 300 of FIG. 3 depicts how query requests from different users can affect the same leaf node. In scenarios where there are thousands or millions of users, concurrent access requests are all but certain. With more collisions, the resulting retries and wait times substantially diminish the concurrent write throughput. To alleviate this problem, a forest graph can be implemented with multiple tree graphs, wherein each tree graph corresponds to a different user. As access requests across tree graphs can be independent from one another, this fully addresses the concurrency problem. However, the backend storage for such database systems is generally block-based. As such, allocating storage space for a tree for each user is impractical.

The present disclosure provides a hybrid solution implementing a space-optimized forest graph for a database system. Using the example of FIG. 3, assume there are three users: A, B, and C. While B and C are ordinary low-activity users, A is an active user who performs like-actions many times every day. In such a case, storing like-actions of user A to a separate tree graph while storing like-actions of users B and C on the initial tree graph would be ideal. Since B and C are low-activity users, query requests associated with users B and C are unlikely to be concurrent. This approach can be scaled to any number of users.

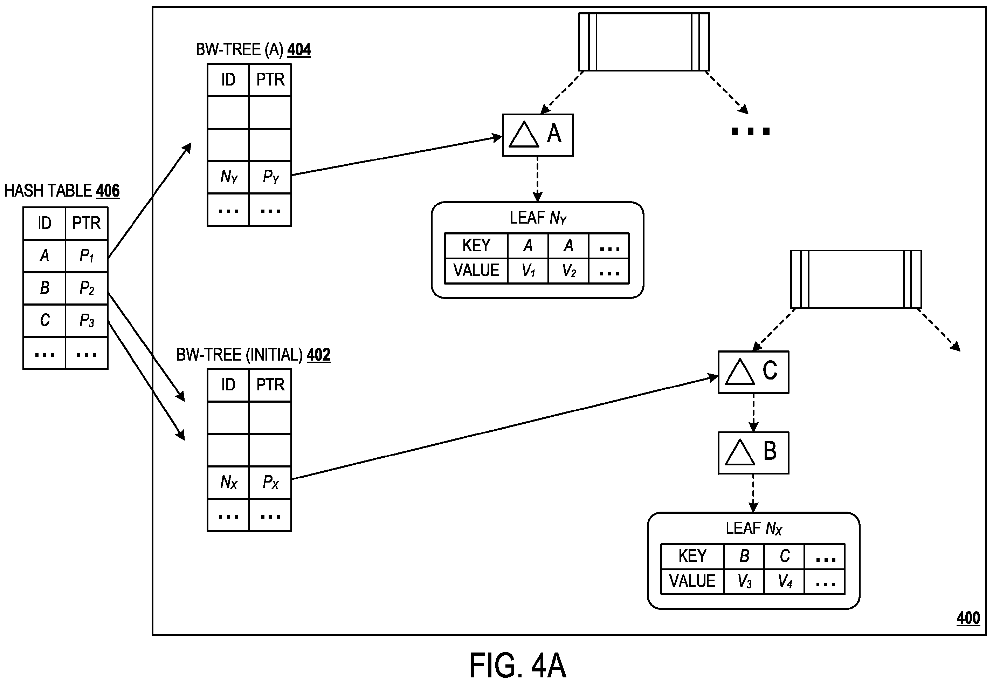

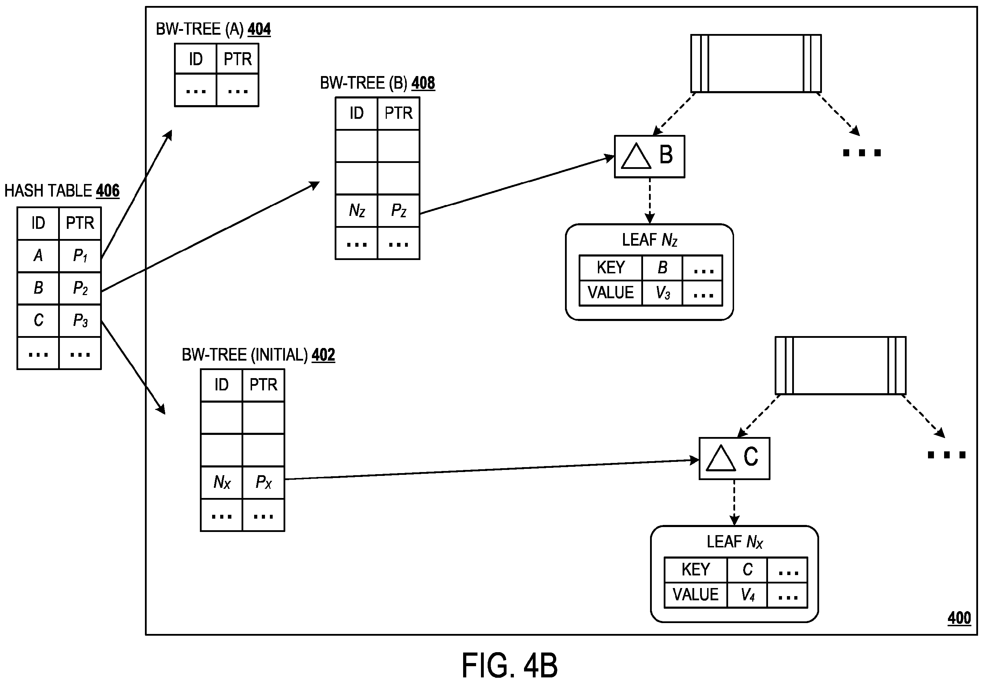

FIGS. 4A and 4B show schematic views of an example graph database implemented using a space-optimized Bw-tree forest graph 400. In FIG. 4A, the Bw-tree forest graph 400 includes an initial Bw-tree graph and a separate Bw-tree graph. In the depicted example, the separate Bw-tree graph corresponds to user identifier A. As shown, the separate Bw-tree graph contains a leaf node *N_{Y}* storing at least two data entries associated with user identifier A. The separate Bw-tree graph also includes a prepended delta record for updating/adding a data entry associated with user identifier A. Query requests associated with user identifiers other than user identifier A (including B and C) are currently directed to the initial Bw-tree graph. As shown, the initial Bw-tree graph contains a leaf node *N_{X}* storing a data entry associated with user identifier B and a data entry associated with user identifier C. The two Bw-tree graphs are logically organized with respective mapping tables 402, 404. Organization of the entire forest graph 400 is managed by a hash table 406. The hash table 406 includes an identifier column and a pointer column. Each entry associates a user identifier with a pointer to a respective Bw-tree. In the depicted example, the entry associated with user identifier A includes a pointer to the separate Bw-tree graph, and the entries associated with user identifiers B and C include pointers to the initial Bw-tree graph.

FIG. 4A depicts a state of a space-optimized forest graph database where user identifier A is classified as a high-activity user and, thus, is associated with a separate tree graph. Using the social media platform example as described above, each data entry corresponds to a like-action user identifier, and user identifier A is a user that performs like-actions often on the social media platform. In such cases, data entries stored on the tree graph associated with user identifier A does not need to include information describing the user identifier. Instead, it is implied that all entries on said tree graph are associated with user identifier A. User identifiers B and C are still considered low-activity users and are, thus, associated with the initial Bw-tree graph. Upon determining a new high-activity user, a new separate Bw-tree can be formed for said user.

Determining high-activity users can be performed in various ways. In some implementations, a user is determined to be a high-activity user upon meeting one or more predetermined thresholds. Any type of thresholds can be utilized. For example, once a number of data entries associated with a user identifier surpasses a predetermined threshold number, their data is split off the initial Bw-tree and placed into a separate individual tree. In some implementations, the splitting event is performed once a rate of query requests received from a user identifier surpasses a predetermined threshold rate.

In FIG. 4A, user identifier A has already been identified as a high-activity user and has a separate individual Bw-tree. Upon determining a new high-activity user, the corresponding data entries can be split off into another separate individual Bw-tree. FIG. 4B depicts a new separate Bw-tree split off from the initial Bw-tree. In the depicted example, user identifier B is determined to be a high-activity user. As such, data entries in the initial Bw-tree associated with user identifier B are split off into a separate Bw-tree along with a respective mapping table 408. The forest graph 400 now includes the initial Bw-tree and two separate Bw-trees. Low-activity users, such as user identifier C, and new users can utilize the initial Bw-tree while user identifiers A and B utilize respective separate Bw-trees.

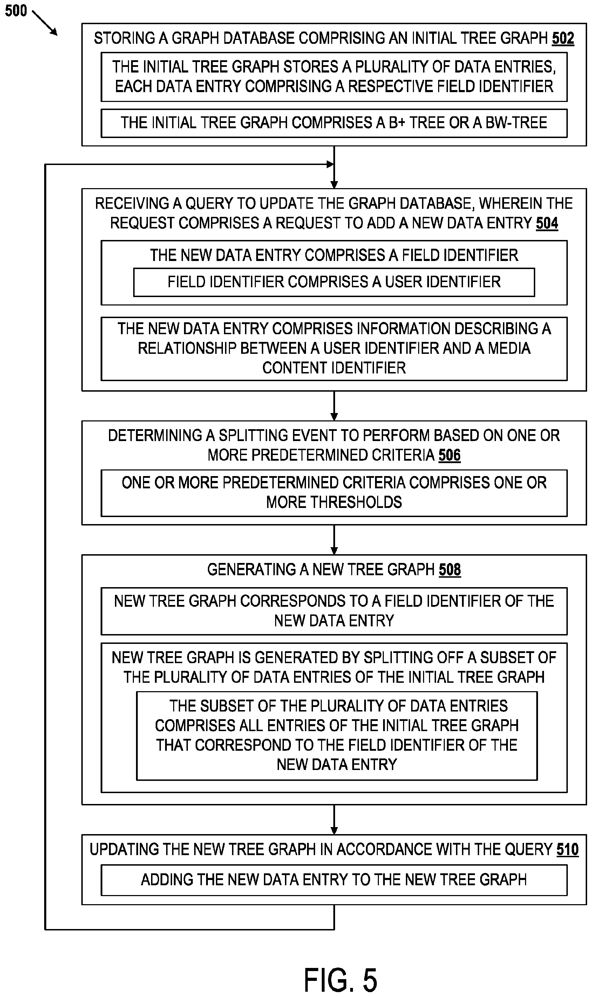

Although FIGS. 4A and 4B depict the example graph database implemented with Bw-trees, other tree structures may also be utilized generally. For example, the forest graph can be implemented using B⁺ tree structures. FIG. 5 shows a process flow diagram of an example method 500 for generally implementing a graph database using a space-optimized forest graph. The method 500 includes, at step 502, storing a graph database comprising an initial tree graph that stores a plurality of data entries. Each of the data entry can store various types of data. In some implementations, each data entry in the initial tree graph includes a respective field identifier. A field identifier can include information identifying a given attribute for the stored data. For example, the field identifier can be a user identifier that identifies a particular user, such as for a social media platform. In some implementations, the data entry stores data in a key-value pair format. For example, the field identifier, such as a user identifier, can be stored as a key. In such cases, the field identifier can be used for indexing, searching, and updating the initial tree graph (e.g., the tree graph can be sorted by key). In some implementations, the data entry includes information describing a relationship between a respective user identifier and a media content identifier. For example, a given data entry can store information describing a like-action performed by a user on a media content on a social media platform. In further implementations, such information is stored as a key, and edge information can be stored as a corresponding value.

The graph database can be implemented in various ways. In some implementations, the graph database includes a hash table and a forest graph that includes the initial tree graph. The initial tree graph can be implemented to be a particular type of tree graph. Various types of tree structures can be utilized. Examples of tree structures that can be utilized include but are not limited to a binary tree, a B-tree, a B⁺ tree, and a Bw-tree. In some implementations, the graph database comprises a plurality of initial tree graphs. The hash table can be implemented in various ways. Generally, the hash table includes a key column and a value column. In some implementations, field identifiers (e.g., user identifiers) serve as keys, and the values are pointers to respective tree graphs associated with respective field identifiers. In some implementations, the graph database is stored using a block-based allocation scheme.

The method 500 includes, at step 504, receiving a query to update the graph database. The query can be any type of database query. In some implementations, the query includes a request to add a new data entry that comprises a field identifier. In further implementations, the new data entry further comprises a value. The field identifier can be any type of identifier. In some implementations, the field identifier comprises a user identifier. For example, the field identifier can be a username, an account number, or any other identifier of a user. Depending on the application, the data entry can include different types of information. In an application for storing information for a social media platform, the data entry can include information describing a user's action. In such cases, the data entry can include a user identifier that identifies the user. In some implementations, the data entry includes information describing performance of a like-action by a user on a media content, such as an image or a video. In such cases, the data entry can include information describing the user, the media content, and/or any other information such as the time and/or date the like-action was performed.

The method 500 includes, at step 506, determining a splitting event to perform based on one or more predetermined criteria. Any type of criteria can be utilized. In some implementations, the one or more predetermined criteria include one or more thresholds. In further implementations, the one or more thresholds includes a threshold number of data entries in the initial tree graph containing the same field identifier as the field identifier of the new data entry. Additionally or alternatively, the one or more thresholds can include a threshold rate of received queries to update the graph database with a data entry containing the same field identifier as the field identifier of the new entry. In some implementations, the threshold rate is above rates of queries corresponding to approximately 80% of the number of different field identifiers in the initial tree graph.

The method 500 includes, at step 508, generating a new tree graph. The new tree graph can correspond to the field identifier of the new data entry and can be generated in various ways. The new tree graph can utilize the same type of graph structure as the initial tree graph. In some implementations, the new tree graph is generated by splitting off a subset of the data entries of the initial tree graph that comprises all entries containing field identifiers corresponding to the field identifier of the new data entry. In some implementations, data can be stored differently in the new tree graph compared to the initial tree graph. For example, the initial tree graph can store data entries using a key-value pair format, wherein information describing a relationship between a user identifier and a media content identifier is stored as a key and edge information describing the relationship can be optionally stored as a value. Since the new tree graph stores data entries corresponding to a given field identifier (e.g., user identifier), such information can be omitted in the new tree graph. In the previous example, instead of storing a relationship between a user identifier and a media content identifier, the data entries in the new tree graph can store just the media content identifier to represent similar information. Such schemes allow for a higher storage efficiency.

The method 500 includes, at step 510, updating the new tree graph in accordance with the query. The update can be, for example, adding the new data entry to the new tree graph. In some implementations, the update is performed before the splitting event occurs. Steps 504-510 can be repeated when a new query request is received. For example, upon receiving a second query to update the graph database, the method 500 can include determining a second splitting event to perform and generating a second new tree graph. The second new tree graph can correspond to the field identifier of a second new data entry corresponding to the second query to update the graph database. This way, the graph database operates to generate a new tree graph to be included in the forest graph every time it determines that a field identifier (e.g., user) satisfies one or more predetermined criteria, which generally reflects the activity level of the field identifier. As such, field identifiers that are more active and more likely to cause concurrent write conflicts can be separated such that queries associated with active field identifiers are performed on individual trees, which can be performed independently of one another.

In the depicted example method 500, the splitting event is determined upon receiving a query to update the graph database. Additionally or alternatively, the graph database can monitor the status of the initial tree graph to determine a splitting event. For example, the graph database can continuously monitor the status of the initial tree graph to determine whether one or more predetermined criteria are met, such as the criteria described above. In some implementations, the one or more predetermined criteria include a size threshold of the initial tree graph. Upon reaching a certain size (storing a certain amount of data), a splitting event can be performed to split off a subset of data entries of the initial tree graph into a new separate tree graph. The subset can be selected in various ways. In some implementations, the subset of data entries includes all data entries of the initial tree graph that correspond to a given field identifier with the highest count of occurrences in the initial tree graph. For example, the subset of data entries can include all data entries associated with a given user identifier with the most data entries (e.g., a new tree graph can be formed to store information for a given user that is determined to be a high activity user).

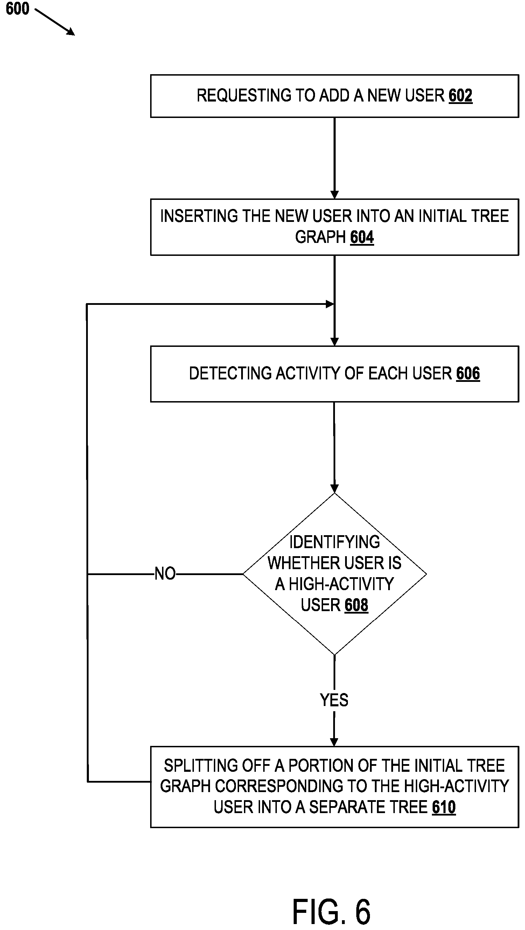

Different applications may implement different variations of the example method 500 of FIG. 5. For example, implementing graph database for a social media platform may involve tracking user identifiers and like-actions performed. FIG. 6 shows a process flow diagram of an example method 600 for implementing a graph database using a space-optimized forest graph for a social media platform. The method 600 includes, at step 602, requesting to add a new user. For example, on a social media platform, new users are added often. These new users should be added and recorded on the forest graph database.

The method 600 includes, at step 604, inserting the new user into an initial tree graph. New users are considered by default to be a low-activity user. As such they can be inserted into the initial tree graph until contrary information is provided. Various types of tree structures can be utilized. Examples of tree structures that can be utilized include but are not limited to a binary tree, a B-tree, a B⁺ tree, and a Bw-tree.

The method 600 includes, at step 606, detecting the activity of each user. Users can be continuously monitored for high-activity. In some implementations, the determination is made upon receiving a query associated with a given user. For example, upon receiving a query associated with adding a like-action performed by a given user, the method 600 can determine whether the given user is a high-activity user based on one or more predetermined criteria. Criteria such as the ones described in the method 500 of FIG. 5 can be utilized.

The method 600 includes, at step 608, identifying whether a user is a high-activity user. The process continually checks for a high-activity user. Upon detection of a high-activity user, the process proceeds to step 610, which splits off a portion of the initial tree graph corresponding to the high-activity user into a separate tree. The process then repeats at step 606 to check for more high-activity users.

The methods and implementations described herein provide for a graph database system that utilizes a forest graph. The forest graph includes a plurality of graphs, including an initial tree graph. The initial graph is a default graph where data entries are stored. As the database grows, data entries associated with high-activity are determined and split off into a separate tree graph. This enables queries from high-activity sources to be made independent from one another while still efficiently making use of storage space by utilizing the initial tree graph for the remaining low-activity sources, which are sources that are less likely to perform queries and therefore less likely to perform concurrent queries that would result in write conflicts.

In some embodiments, the methods and processes described herein may be tied to a computing system of one or more computing devices. In particular, such methods and processes may be implemented as a computer-application program or service, an application-programming interface (API), a library, and/or other computer-program product.

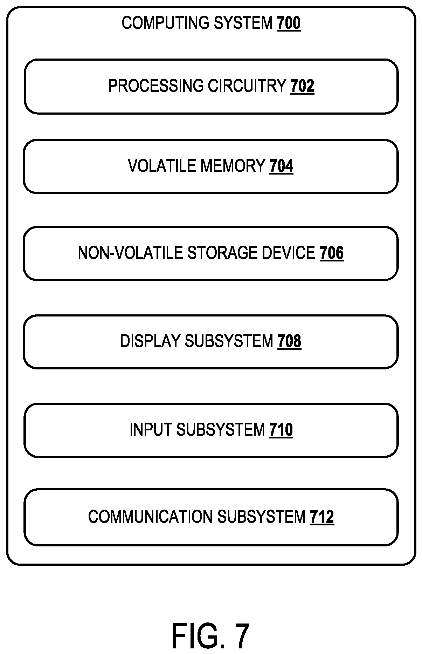

FIG. 7 schematically shows a non-limiting embodiment of a computing system 700 that can enact one or more of the methods and processes described above. Computing system 700 is shown in simplified form. Computing system 700 may embody the computing system 100 described above and illustrated in FIG. 1. Components of computing system 700 may be included in one or more personal computers, server computers, tablet computers, home-entertainment computers, network computing devices, video game devices, mobile computing devices, mobile communication devices (e.g., smart phone), and/or other computing devices.

Computing system 700 includes processing circuitry 702, volatile memory 704, and a non-volatile storage device 706. Computing system 700 may optionally include a display subsystem 708, input subsystem 710, communication subsystem 712, and/or other components not shown in FIG. 7.

Processing circuitry 702 includes a logic processor that can be implemented with one or more physical devices configured to execute instructions. For example, the processing circuitry 702 may be configured to execute instructions that are part of one or more applications, programs, routines, libraries, objects, components, data structures, or other logical constructs. Such instructions may be implemented to perform a task, implement a data type, transform the state of one or more components, achieve a technical effect, or otherwise arrive at a desired result.

The processing circuitry 702 may include one or more physical processors configured to execute software instructions. Additionally or alternatively, the processing circuitry 702 may include one or more hardware logic circuits or firmware devices configured to execute hardware-implemented logic or firmware instructions. Processors of the processing circuitry 702 may be single-core or multi-core, and the instructions executed thereon may be configured for sequential, parallel, and/or distributed processing. Individual components of the processing circuitry 702 optionally may be distributed among two or more separate devices, which may be remotely located and/or configured for coordinated processing. Aspects of the processing circuitry 702 may be virtualized and executed by remotely accessible, networked computing devices configured in a cloud-computing configuration. In such a case, these virtualized aspects are run on different physical logic processors of various different machines, it will be understood.

Non-volatile storage device 706 includes one or more physical devices configured to hold instructions executable by the processing circuitry 702 to implement the methods and processes described herein. When such methods and processes are implemented, the state of non-volatile storage device 706 may be transformed-e.g., to hold different data.

Non-volatile storage device 706 may include physical devices that are removable and/or built in. Non-volatile storage device 706 may include optical memory, semiconductor memory, and/or magnetic memory, or other mass storage device technology. Non-volatile storage device 706 may include nonvolatile, dynamic, static, read/write, read-only, sequential-access, location-addressable, file-addressable, and/or content-addressable devices. It will be appreciated that non-volatile storage device 706 is configured to hold instructions even when power is cut to the non-volatile storage device 706.

Volatile memory 704 may include physical devices that include random access memory. Volatile memory 704 is typically utilized by processing circuitry 702 to temporarily store information during processing of software instructions. It will be appreciated that volatile memory 704 typically does not continue to store instructions when power is cut to the volatile memory 704.

Aspects of processing circuitry 702, volatile memory 704, and non-volatile storage device 706 may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms "module," "program," and "engine" may be used to describe an aspect of computing system 700 typically implemented in software by a processor to perform a particular function using portions of volatile memory, which function involves transformative processing that specially configures the processor to perform the function. Thus, a module, program, or engine may be instantiated via processing circuitry 702 executing instructions held by non-volatile storage device 706, using portions of volatile memory 704. It will be understood that different modules, programs, and/or engines may be instantiated from the same application, service, code block, object, library, routine, API, function, etc. Likewise, the same module, program, and/or engine may be instantiated by different applications, services, code blocks, objects, routines, APIs, functions, etc. The terms "module," "program," and "engine" may encompass individual or groups of executable files, data files, libraries, drivers, scripts, database records, etc.

When included, display subsystem 708 may be used to present a visual representation of data held by non-volatile storage device 706. The visual representation may take the form of a graphical user interface (GUI). As the herein described methods and processes change the data held by the non-volatile storage device, and thus transform the state of the non-volatile storage device, the state of display subsystem 708 may likewise be transformed to visually represent changes in the underlying data. Display subsystem 708 may include one or more display devices utilizing virtually any type of technology. Such display devices may be combined with processing circuitry 702, volatile memory 704, and/or non-volatile storage device 706 in a shared enclosure, or such display devices may be peripheral display devices.

When included, input subsystem 710 may comprise or interface with one or more user-input devices such as a keyboard, mouse, touch screen, camera, or microphone.

When included, communication subsystem 712 may be configured to communicatively couple various computing devices described herein with each other, and with other devices. Communication subsystem 712 may include wired and/or wireless communication devices compatible with one or more different communication protocols. As non-limiting examples, the communication subsystem may be configured for communication via a wired or wireless local- or wide-area network, broadband cellular network, etc. In some embodiments, the communication subsystem may allow computing system 700 to send and/or receive messages to and/or from other devices via a network such as the Internet.

The following paragraphs provide additional description of the subject matter of the present disclosure. One example provides a computing system for implementing a graph database system, the computing system comprising: processing circuitry and memory storing instructions that, when executed, causes the processing circuitry to: store a graph database comprising an initial tree graph storing a plurality of data entries, each data entry comprising a respective field identifier; receive a query to update the graph database, wherein the query comprises a request to add a new data entry; determine a splitting event to perform based on one or more predetermined criteria; generate a new tree graph corresponding to a field identifier of the new data entry by splitting off a subset of the plurality of data entries of the initial tree graph, wherein the subset of the plurality of data entries comprises all data entries of the initial tree graph that correspond to the field identifier of the new data entry; and update the new tree graph in accordance with the query. In this example, additionally or alternatively, the graph database further comprises a hash table with different field identifiers as keys, and values of the hash table point to respective tree graphs storing data entries corresponding to respective field identifiers. In this example, additionally or alternatively, the field identifiers of the initial tree graph comprise user identifiers, and wherein each of the plurality of data entries of the initial tree graph comprises information describing a relationship between a respective user identifier and a respective media content identifier. In this example, additionally or alternatively, generating the new tree graph comprises storing the subset of the plurality of data entries of the initial tree graph with respective media content identifiers and without respective user identifiers. In this example, additionally or alternatively, the one or more predetermined criteria comprise one or more thresholds of: a number of data entries in the initial tree graph corresponding to the field identifier of the new data entry; or a rate of received queries to update the graph database corresponding to the field identifier of the new data entry. In this example, additionally or alternatively, the field identifier comprises a user identifier. In this example, additionally or alternatively, the initial tree graph comprises data entries with a number of different user identifiers, and wherein the threshold of the rate of received queries is above rates of queries of approximately 80% of the number of different user identifiers in the initial tree graph. In this example, additionally or alternatively, the initial tree graph comprises a B+ tree or a Bw-tree. In this example, additionally or alternatively, the instructions, when executed, further causes the processing circuitry to: receive a second query to update the graph database, wherein the second query comprises a request to add a second new data entry; determine a second splitting event to perform; generate a second new tree graph corresponding to a field identifier of the second new data entry by splitting off a second portion of the initial tree graph, wherein the second portion comprises a second subset of the plurality of data entries of the initial tree graph corresponding to the field identifier of the second new data entry; and update the second new tree graph in accordance with the second query.

Another example provides a method for implementing a graph database system, the method comprising: storing a graph database comprising an initial tree graph storing a plurality of data entries, each data entry comprising information describing a relationship between a respective user identifier and a respective media content identifier; determining a splitting event to perform based on one or more predetermined criteria; and generating a new tree graph by splitting off a subset of the plurality of data entries of the initial tree graph, wherein the subset of the plurality of data entries comprises all data entries of the initial tree graph that correspond to a same user identifier. In this example, additionally or alternatively, generating the new tree graph comprises storing the subset of the plurality of data entries of the initial tree graph with respective media content identifiers and without respective user identifiers. In this example, additionally or alternatively, the one or more predetermined criteria comprise a size threshold of the initial tree graph. In this example, additionally or alternatively, the same user identifier corresponding to the subset of the plurality of data entries of the initial tree graph has a highest count of occurrences in the initial tree graph. In this example, additionally or alternatively, the one or more predetermined criteria comprise one or more thresholds of: a number of data entries in the initial tree graph corresponding to the same user identifier; or a rate of received queries to update the graph database corresponding to the same user identifier. In this example, additionally or alternatively, the plurality of data entries of the initial tree graph has a number of different user identifiers, and wherein the threshold of the rate of received queries is above rates of queries of approximately 80% of the number of different user identifiers in the initial tree graph. In this example, additionally or alternatively, the initial tree graph comprises a B+ tree or a Bw-tree. In this example, additionally or alternatively, the graph database further comprises a hash table with different user identifiers as keys, and values of the hash table point to respective tree graphs storing data entries corresponding to respective user identifiers.

Another example provides a method for storing user data of a social media platform using a graph database system, the method comprising: in response to an event of a user performing an action on a social media platform, receiving a query to update a graph database comprising an initial Bw-tree graph, wherein the query comprises a request to add a new data entry comprising: a user identifier corresponding to the user; and information describing the action performed by the user; determining a splitting event to perform based on one or more predetermined criteria; generating a new Bw-tree graph corresponding to the user identifier of the new data entry by splitting off a portion of the initial Bw-tree graph, wherein the portion comprises data entries of the initial Bw-tree graph corresponding to the user identifier of the new data entry; and updating the new Bw-tree graph in accordance with the query. In this example, additionally or alternatively, the information describing the action performed by the user comprises information indicating that the user performed a like-action on a video. In this example, additionally or alternatively, the one or more predetermined criteria comprise one or more thresholds of: a number of data entries in the initial Bw-tree graph corresponding to the user identifier of the new data entry; or a rate of received queries to update the graph database corresponding to the user identifier of the new data entry.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A computing system for implementing a graph database system, the computing system comprising:
processing circuitry and memory storing instructions that, when executed, causes the processing circuitry to:
store (502) a graph database comprising an initial tree graph storing a plurality of data entries, each data entry comprising a respective field identifier;
receive (504) a query to update the graph database, wherein the query comprises a request to add a new data entry;
determine (506) a splitting event to perform based on one or more predetermined criteria;
generate (508) a new tree graph corresponding to a field identifier of the new data entry by splitting off a subset of the plurality of data entries of the initial tree graph, wherein the subset of the plurality of data entries comprises all data entries of the initial tree graph that correspond to the field identifier of the new data entry; and
update (510) the new tree graph in accordance with the query.

2. The computing system of claim 1, wherein the graph database further comprises a hash table with different field identifiers as keys, and values of the hash table point to respective tree graphs storing data entries corresponding to respective field identifiers.

3. The computing system of claim 1, wherein the field identifiers of the initial tree graph comprise user identifiers, and wherein each of the plurality of data entries of the initial tree graph comprises information describing a relationship between a respective user identifier and a respective media content identifier.

4. The computing system of claim 3, wherein generating the new tree graph comprises storing the subset of the plurality of data entries of the initial tree graph with respective media content identifiers and without respective user identifiers.

5. The computing system of claim 1, wherein the one or more predetermined criteria comprise one or more thresholds of:
a number of data entries in the initial tree graph corresponding to the field identifier of the new data entry; or
a rate of received queries to update the graph database corresponding to the field identifier of the new data entry.

6. The computing system of claim 5, wherein the field identifier comprises a user identifier,
preferably, the initial tree graph comprises data entries with a number of different user identifiers, and wherein the threshold of the rate of received queries is above rates of queries of approximately 80% of the number of different user identifiers in the initial tree graph.

7. The computing system of claim 1, wherein the initial tree graph comprises a B+ tree or a Bw-tree.

8. The computing system of claim 1, wherein the instructions, when executed, further causes the processing circuitry to:
receive a second query to update the graph database, wherein the second query comprises a request to add a second new data entry;
determine a second splitting event to perform;
generate a second new tree graph corresponding to a field identifier of the second new data entry by splitting off a second portion of the initial tree graph, wherein the second portion comprises a second subset of the plurality of data entries of the initial tree graph corresponding to the field identifier of the second new data entry; and
update the second new tree graph in accordance with the second query.

9. A method for implementing a graph database system, the method comprising:
storing (502) a graph database comprising an initial tree graph storing a plurality of data entries, each data entry comprising information describing a relationship between a respective user identifier and a respective media content identifier;
determining (506) a splitting event to perform based on one or more predetermined criteria; and
generating (508) a new tree graph by splitting off a subset of the plurality of data entries of the initial tree graph, wherein the subset of the plurality of data entries comprises all data entries of the initial tree graph that correspond to a same user identifier.

10. The method of claim 9, wherein generating the new tree graph comprises storing the subset of the plurality of data entries of the initial tree graph with respective media content identifiers and without respective user identifiers.

11. The method of claim 9, wherein the one or more predetermined criteria comprise a size threshold of the initial tree graph,
preferably, the same user identifier corresponding to the subset of the plurality of data entries of the initial tree graph has a highest count of occurrences in the initial tree graph.

12. The method of claim 9, wherein the one or more predetermined criteria comprise one or more thresholds of:
a number of data entries in the initial tree graph corresponding to the same user identifier; or
a rate of received queries to update the graph database corresponding to the same user identifier,
preferably, the plurality of data entries of the initial tree graph has a number of different user identifiers, and wherein the threshold of the rate of received queries is above rates of queries of approximately 80% of the number of different user identifiers in the initial tree graph.

13. A method for storing user data of a social media platform using a graph database system, the method comprising:
in response to an event of a user performing an action on a social media platform, receiving a query to update a graph database comprising an initial Bw-tree graph, wherein the query comprises a request to add a new data entry comprising:
a user identifier corresponding to the user; and
information describing the action performed by the user;
determining a splitting event to perform based on one or more predetermined criteria;
generating a new Bw-tree graph corresponding to the user identifier of the new data entry by splitting off a portion of the initial Bw-tree graph, wherein the portion comprises data entries of the initial Bw-tree graph corresponding to the user identifier of the new data entry; and
updating the new Bw-tree graph in accordance with the query.

14. The method of claim 13, wherein the information describing the action performed by the user comprises information indicating that the user performed a like-action on a video.

15. The method of claim 13, wherein the one or more predetermined criteria comprise one or more thresholds of:
a number of data entries in the initial Bw-tree graph corresponding to the user identifier of the new data entry; or
a rate of received queries to update the graph database corresponding to the user identifier of the new data entry.
